# EUROPÄISCHE PATENTANMELDUNG

(11) **EP 0 710 862 A1**
(43) Veröffentlichungstag der Anmeldung: **08.05.1996**
(21) Anmeldenummer: 95116859.0
(22) Anmeldetag: 26.10.1995
(51) Int. Cl.: G02B 6/44

(54) **Verwendung eines mit Lichtwellenleitern versehenen Kabels als Seekabel**

(30) Priorität: 04.11.1994 CH 3294/94
(71) Anmelder: Brugg Telecom AG, CH-5200 Brugg (CH)
(72) Erfinder: Fargahi, Abdulamir, CH-5242 Birr/AG (CH); Zimmermann, Hubert, Dr., CH-5245 Habsburg/AG (CH)
(74) Vertreter: Steudtner, Werner, Dipl.-Ing.

(57) **Zusammenfassung**

Verwendung eines Freileiterseiles (1) bzw. eines Seiles mit dem Aufbau eines Freileiterseiles mit einer Vielzahl von verseilten Drähten (2, 4, 9) aus Metall oder teilweise aus Metall und teilweise aus Kunststoff und mindestens einem eingeseilten Lichtwellenleiter-Röhrchen (5) sowie einem oder mehreren innerhalb des Lichtwellenleiter-Röhrchens (5) angeordneten Lichtwellenleitern (6) als Seekabel zur Realisierung eines Seekabels mit wesentlich geringerem Volumen pro Längeneinheit bzw. wesentlich geringerem Durchmesser als dem der herkömmlichen Seekabel.

## Beschreibung

Die Erfindung bezieht sich auf die Verwendung eines für andere Anwendungszwecke vorgesehenen, mit Lichtwellenleitern versehenen bekannten Kabels als Seekabel.

Seekabel sind bekanntlich insofern besonders vorteilhaft, als die Verlegungskosten eines Seekabels in aller Regel nur einen geringen Bruchteil der Verlegungskosten eines an Land verlegten Kabels betragen, weil bei der Verlegung an Land beträchtliche Tiefbauarbeiten zu leisten sind, die erhebliche Baukosten verursachen. Ausserdem ist die Kabellänge bei der Verbindung zweier Orte mittels eines Seekabels in aller Regel geringer als bei an Land verlegten Kabeln, weil Seekabel im wesentlichen geradlinig im See verlegt werden, während die Streckenführung bei der Verlegung eines Kabels an Land in aller Regel nicht geradlinig erfolgen kann. Ausserdem ist natürlich die Verbindung von zwei an gegenüberliegenden Ufern eines Gewässers befindlichen Orten durch das Gewässer hindurch erheblich kürzer als entlang des Ufers eines beispielsweise langgestreckten Sees.

Problematisch war bei den herkömmlichen Seekabeln wie z.B. dem aus dem "Technischen Mitteilungen PTT 4/1992", S. 158 - 160, bekannten Seekabel jedoch, dass ihr bisher üblicher Aufbau relativ voluminös war bzw. diese Seekabel einen relativ grossen Durchmesser hatten. Denn bei Kabeln mit relativ grossem Durchmesser ist natürlich die auf eine Kabelrolle passende Kabellänge wesentlich geringer als bei Kabeln mit relativ geringem Durchmesser. Beispielsweise ergibt sich bei einem Kabel mit dem halben Durchmesser der bisher üblichen Seekabel eine auf die gleiche Kabelrolle passende Kabellänge von etwa dem vierfachen der herkömmlichen Seekabel. Für Kabelrollen gibt es nun aus Gründen der Transportierbarkeit bestimmte Maximalmasse, oberhalb derer ein Transport auf dem Schienen- oder Strassenwege nicht mehr möglich ist, und entsprechend ist auch die maximal auf eine Kabelrolle passende Kabellänge nach oben zu begrenzt und lässt sich praktisch nur durch eine Reduktion des Kabeldurchmessers etwa umgekehrt proportional dem Quadrat des Reduktionsfaktors erhöhen.

Bei Seekabeln und insbesondere Seekabeln mit Lichtwellenleitern ist es nun in hohem Masse erwünscht, dass ein zwei Orte verbindendes Kabel nicht aus mehreren Teilstücken zusammengesetzt werden muss, sondern in einem Stück zwischen den verschiedenen Orten verläuft, zumindest aber durch das Gewässer in einem Stück hindurchgeführt ist. Zwar sind auch bei Seekabeln prinzipiell Verbindungen der Enden zweier Teilstücke innerhalb des Gewässers möglich, aber in der Regel wird dies sowohl aus Gründen des Korrosionsschutzes als auch aus Gründen der Zugkraftübertragung an der Verbindungsstelle zweier Teilstücke als nachteilig und unerwünscht angesehen. Damit ist aber aus den obengenannten Gründen die Kabellänge beschränkt und lässt sich nur durch eine Reduktion des Kabeldurchmessers gegenüber den bisher üblichen Seekabeln in nennenswertem Masse erhöhen.

Die der Erfindung zugrundeliegende Aufgabe war daher, ein Kabel zu finden, mit dem sich unter den vorgegebenen Bedingungen der Transportierbarkeit auf Strassen- oder Schienenwegen unter Erfüllung aller an die herkömmlichen Seekabel mit Lichtwellenleitern gestellten Anforderungen eine wesentlich grössere Kabellänge in einem Stück erreichen lässt, bzw. ein den Anforderungen an Seekabel mit Lichtwellenleitern entsprechendes Kabel mit wesentlich geringerem Durchmesser als dem der herkömmlichen Seekabel mit Lichtwellenleitern zu finden.

Erfindungsgemäss wird diese Aufgabe durch die Verwendung eines Freileiterseiles bzw. eines Seiles mit dem Aufbau eines Freileiterseiles mit einer Vielzahl von verseilten Drähten aus Metall oder teilweise aus Metall und teilweise aus Kunststoff und mindestens einem eingeseilten Lichtwellenleiter-Röhrchen sowie einem oder mehreren innerhalb des Lichtwellenleiter-Röhrchens angeordneten Lichtwellenleitern als Seekabel gelöst.

Hauptvorteil dieser Verwendung ist die unter den vorgegebenen Bedingungen erreichbare wesentlich grössere Kabellänge als bei den herkömmlichen Seekabeln mit Lichtwellenleitern und die damit gegebene Möglichkeit, wesentlich grössere Distanzen als bisher mit einem einstückigen, d.h. nicht aus einzelnen Teilstücken zusammengesetzten Seekabel überbrücken zu können. Ein weiterer wesentlicher Vorteil ergibt sich daraus, dass Freileiterseile aufgrund ihres kompakten Aufbaus eine wesentlich grössere Dichte vom 1,5- bis 3-fachen, meist etwa dem doppelten der Dichte der herkömmlichen Seekabel aufweisen und die Verwendung eines Freileiterseiles mit Lichtwellenleitern als Seekabel daher Vereinfachungen bei der Kabelverlegung mit sich bringt, denn erstens kann ein solches als Seekabel verwendetes Freileiterseil der genannten Art direkt ab der Kabelrolle von einem Verlege-Schiff oder -Floss aus verlegt werden und braucht nicht mehr von einer am Ufer stehenden Kabelrolle abgezogen und mit seinem abgezogenen Teil zur Vermeidung eines Schleifens desselben auf dem Seegrund mit Schwimmern an der Seeoberfläche gehalten werden, zweitens sinkt ein Kabel mit relativ hoher Dichte von z.B. ca. 4 g/cm³ wesentlich schneller im See ab als ein Kabel mit relativ geringer Dichte von weniger als 2 g/cm³ wie der der herkömmlichen Seekabel mit Lichtwellenleitern und drittens sinkt ein Kabel mit grösserer Dichte als der des z.B. aus Sand oder Schlamm bestehenden Seegrundes im Laufe der Zeit in den Seegrund ein und wird dadurch von dem umgebenden Seegrund zusätzlich gegen Beschädigungen wie z.B. dem Hängenbleiben eines Ankers an dem Seekabel geschützt.

Ein weiterer wichtiger Vorteil der vorliegenden Verwendung ist die Möglichkeit einer beträchtlichen Einsparung von Verlegekosten bei Neuverlegungen von Kabelverbindungen zwischen in Flussnähe oder Seeufernähe gelegenen Orten mit grösseren Distanzen längs des Flusses bzw. eines langgestreckten Sees, indem man ein als Seekabel verwendetes Freileiterseil der genannten Art längs des Flusses bzw. langgestreckten Sees im Fluss bzw. See verlegt, anstatt das Kabel mit wesentlich höheren Verlegekosten an Land zu verlegen.

Ein prinzipieller Vorteil der vorliegenden Verwendung ist ferner, dass man ein Freileiterseil mit Lichtwellenleitern grundsätzlich so wie es ist - also ohne spezielle Berücksichtigung seiner Verlegung im Wasser - als Süsswasser-Seekabel verwenden kann, weil Freileiterseile ja bestimmungsgemäss wetterfest sind und daher Regen und Nässe ohne Beeinträchtigung standhalten.

Vorzugsweise wird bei der vorliegenden Verwendung ein Freileiterseil der genannten Art, bei dem die Drähte Stahldrähte und die Lichtwellenleiter-Röhrchen Edelstahlröhrchen sind, als Seekabel verwendet. Damit ergibt sich der Vorteil einer wesentlich höheren Zugfestigkeit bei gleichzeitig wesentlich geringerem Volumen bzw. Durchmesser als dem der herkömmlichen Seekabel mit Lichtwellenleitern. Die Edelstahlröhrchen können dabei vorteilhaft unbeschichtet oder zweckmässig auch mit einem von Edelstahl verschiedenen Material beschichtet sein.

Generell können die Drähte bei dem verwendeten Freileiterseil zweckmässig aus Metall bestehen und eine Korrosionsschutzschicht aufweisen und vorzugsweise mindestens zum Teil aus verzinkten Stahldrähten bestehen. Das hat den Vorteil, dass neben hoher Zugfestigkeit des als Seekabel verwendeten Freileiterseiles mit Lichtwellenleitern insbesondere mit dickverzinkten Stahldrähten auch eine besonders gute Korrosionsfestigkeit erreicht wird.

Bei einer besonderen Form der vorliegenden Verwendung eines Freileiterseils mit Lichtwellenleitern als Seekabel hat das Freileiterseil einen Seilaufbau mit einem Kerndraht und mindestens zwei in entgegengesetzter Schlagrichtung verseilten Drahtlagen, wobei die Drähte in jeder einzelnen Drahtlage untereinander gleichen Durchmesser aufweisen und in mindestens einer Drahtlage mindestens ein Lichtwellenleiter-Röhrchen von wenigstens annähernd gleichem Durchmesser wie dem der Drähte der betreffenden Drahtlage anstelle eines Drahtes in die Drahtlage eingeseilt ist und wobei der bzw. die Lichtwellenleiter-Röhrchen vorzugsweise in mindestens eine innere Drahtlage eingeseilt sind. Die Verwendung eines Freileiterseils mit einem solchen Seilaufbau als Seekabel ist von besonderem Vorteil sowohl hinsichtlich geringem Volumen bzw. Durchmesser und hoher Zugfestigkeit als auch bezüglich grosser Korrosionsbeständigkeit.

Zweckmässig wird bei der vorliegenden Verwendung ein Freileiterseil der genannten Art als Seekabel verwendet, bei dem die innerhalb des bzw. der Lichtwellenleiter-Röhrchen verbleibenden Hohlräume in gleicher Weise wie bei den bekannten Freileiterseilen mit Lichtwellenleitern mit einer nichtsteifen Füllmasse gefüllt sind. Das hat neben dem Vorteil der infolge der nichtsteifen Füllmasse gegebenen Biegsamkeit der Lichtwellenleiter-Röhrchen, der schon bei den bekannten Freileiterseilen mit Lichtwellenleitern gegeben ist, bei der Verwendung als Seekabel noch den zusätzlichen Vorteil, dass auch die Möglichkeit eines Eindringens von Wasser in die Lichtwellenleiter-Röhrchen verhindert wird.

Mit besonderem Vorteil kann das als Seekabel verwendete Freileiterseil mit Lichtwellenleitern so weitergebildet sein, dass die Zwischenräume zwischen den Drähten bzw. Lichtwellenleiter-Röhrchen des Seiles und vorzugsweise auch zwischen den äusseren Drähten und einer das Seil umschliessenden Hüllfläche mit einer vorzugsweise wasserabweisenden Kabelfüllmasse, vorzugsweise mit Bitumen, gefüllt sind. Die Hüllfläche kann dabei zweckmässig im wesentlichen zylindermantelförmig sein und einen Durchmesser von weniger als 18 mm haben. Der Vorteil der Verwendung eines derart weitergebildeten Freileiterseiles als Seekabel besteht darin, dass in das Seilinnere und insbesondere in die Zwischenräume zwischen den Drähten kein Wasser eindringen kann, so dass der Korrosionsschutz dadurch noch weiter verbessert wird.

Insbesondere für die Verwendung eines Freileiterseiles der genannten Art als Seekabel für salzhaltige Gewässer wie z.B. dem Meer oder auch für Gewässer mit aggressiven Bestandteilen wie z.B. durch Chemikalien oder ungeklärte Abwässer verschmutzte Flüsse und Seen ist es weiter von besonderem Vorteil, das Seil noch mit einem vorzugsweise wasserdichten, zweckmässig aus Polyäthylen bestehenden Mantel zu umhüllen. Ein derart weitergebildetes Freileiterseil als Seekabel kann bei besonders hohen Sicherheitsanforderungen aber auch vorteilhaft als Süsswasser-Seekabel eingesetzt werden. Der Mantel eines derart weitergebildeten Freileiterseils kann dabei zweckmässig einen Aussendurchmesser von weniger als 20 mm haben.

Anhand der nachstehenden Figuren ist die Erfindung im folgenden an einigen Ausführungsbeispielen näher erläutert. Es zeigen
- Fig.1: ein als Seekabel, insbesondere für Süsswasser, verwendbares Freileiterseil mit sechzehn dickverzinkten Stahldrähten und drei aus Edelstahl bestehenden Lichtwellenleiter-Röhrchen im Querschnitt.
- Fig.2: ein als Seekabel verwendbares Freileiterseil, bei dem das Seilinnere durch eine wasserabweisende Kabelfüllmasse wie Bitumen gegen das Eindringen von Wasser geschützt ist, mit achtzehn dickverzinkten Stahldrähten und einem aus Edelstahl bestehenden Lichtwellenleiter-Röhrchen im Querschnitt.
- Fig.3: ein als Seekabel, insbesondere für Salzwasser, verwendbares Freileiterseil wie in Fig.2, bei dem das Seil zusätzlich mit einem Polyäthylenmantel gegen ein Eindringen von Wasser und damit in besonders hohem Masse gegen Korrosion geschützt ist, im Querschnitt.

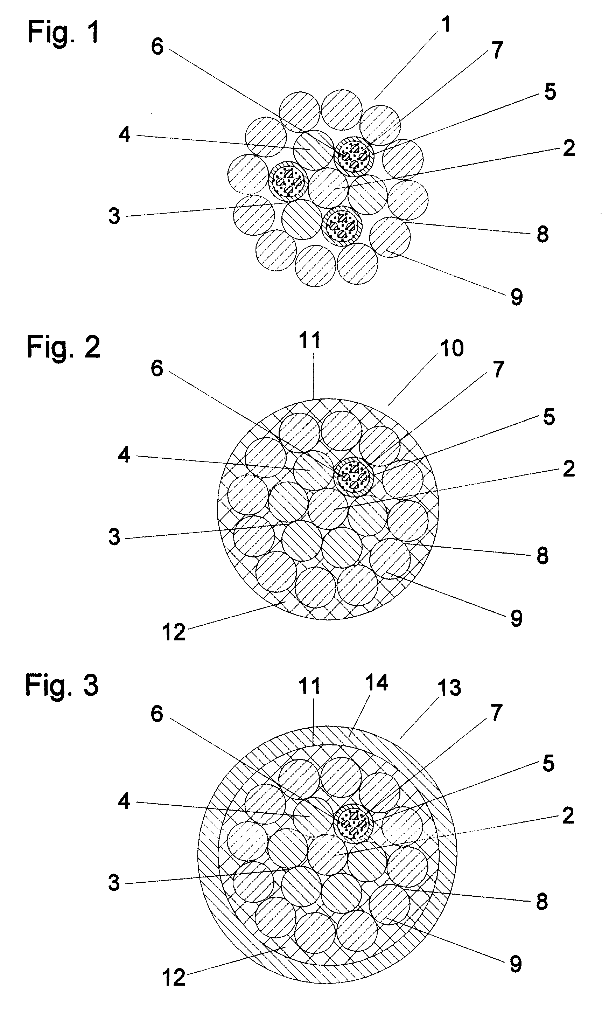

Das in Fig. 1 gezeigte, für die vorliegende Verwendung als Seekabel, insbesondere als Süsswasser-Seekabel, verwendbare Freileiterseil 1 mit Lichtwellenleitern hat einen Seilaufbau mit einem aus dickverzinktem Stahldraht bestehenden Kerndraht 2, eine um den Kerndraht 2 herum in einer ersten Schlagrichtung verseilte erste Drahtlage 3 mit drei dickverzinkten Stahldrähten 4 und drei Edelstahlröhrchen 5, von denen jedes bis zu dreissig Lichtwellenleiter 6 enthält und mit einer nichtsteifen, gallertartigen Füllmasse 7 gefüllt ist, und eine um die erste Drahtlage 3 herum in einer gegenüber derselben in entgegengesetzter Schlagrichtung verseilte zweite Drahtlage 8 mit zwölf dickverzinkten Stahldrähten 9. Die technischen Eigenschaften dieses Freileiterseils 1 mit Lichtwellenleitern sind im einzelnen in den "International Wire & Cable Symposium Proceedings 1993" auf den Seiten 182 - 186 in dem Artikel "Design and test of a new metallic fibre-optic cable for aerial cable ways" beschrieben. Die Dicke des Zinküberzuges auf den Stahldrähten 2, 4 und 9 ist der DIN-Norm "DIN 1548 für Zinküberzüge auf runden Stahldrähten" unter der Rubrik "Dickverzinkung" zu entnehmen und liegt im Bereich von etwa 1/40 des Drahtdurchmessers bei dünnen Drähten bis zu etwa 1/200 des Drahtdurchmessers bei dicken Drähten. Da mit solchen dickverzinkten Stahldrähten und Edelstahlröhrchen als Lichtwellenleiter-Röhrchen der Korrosionsschutz bei der Verwendung des Freileiterseils als Seekabel, insbesondere in Süsswasser-Seen, in genügendem Masse gewährleistet ist, ist es bei der vorliegenden Verwendung - jedenfalls als Süsswasser-Seekabel - im Prinzip nicht erforderlich, besondere Massnahmen zur Erhöhung des Korrosionsschutzes vorzusehen.

Generell ist ferner bei der Verwendung von Freileiterseilen mit Lichtwellenleitern als Seekabel zu beachten, dass die Zugbeanspruchung eines Seekabels in der Regel geringer, häufig sogar wesentlich geringer als die maximale Zugbeanspruchung eines entsprechenden Freileiterseils ist, weil erstens Seekabel meist auf dem Grund des Sees aufliegt und zweitens das "wirksame Gewicht" eines Seekabels um das Gewicht der von demselben verdrängten Wassermenge geringer als das tatsächliche Gewicht dieses Seekabels ist und demgemäss auch dann, wenn das Seekabel nicht auf dem Grund des Sees aufliegt, die Zugbelastung des Seekabels geringer als die eines entsprechenden Freileiterseils ist. Ausserdem muss ein Freileiterseil auch schon deswegen höheren Zugbelastungen als ein Seekabel standhalten, weil beim Freileiterseil zusätzliche Zugbelastungen durch stürmische Winde und durch Vereisung des Seiles und ferner auch durch starke Anspannung bei sehr tiefen Temperaturen auftreten können, während ein Seekabel demgegenüber nur relativ geringen Temperaturschwankungen ausgesetzt ist und auch die durch Strömung innerhalb eines Gewässers verursachten Erhöhungen der Zugbeanspruchung eines durch das Gewässer verlegten Seekabels wesentlich geringer als die durch stürmische Winde verursachten Erhöhungen der Zugbelastung eines Freileiterseiles sind. Aus den genannten Gründen kann bei einem als Seekabel verwendeten Freileiterseil mit Lichtwellenleitern auch nur ein Teil der Drähte aus Metall wie z.B. verzinktem Stahldraht und der Rest der Drähte aus Kunststoff, insbesondere einem für Drähte geeignetem Kunststoff wie Polyurethan oder aromatischem Polyamid bestehen. Beispielsweise wäre es bei dem in Fig. 1 gezeigten, für die vorliegende Verwendung als Seekabel verwendbaren Freileiterseil 1 ebenso wie auch bei den in den Figuren 2 und 3 gezeigten als Seekabel verwendbaren Seilen aus den genannten Gründen durchaus möglich, anstelle eines Seiles mit zwölf dickverzinkten Stahldrähten in der äusseren Drahtlage 8 ein Seil mit sechs dickverzinkten Stahldrähten und sechs Kunststoffdrähten zu verwenden, bei dem Stahl- und Kunststoffdrähte abwechselnd in der Drahtlage 8 angeordnet sind. Ein solcher Seilaufbau führt auch zu einer Verringerung des Seilgewichts pro Längeneinheit, was für die Transportierbarkeit bei sehr langen Seilen bzw. bei voller Ausnützung des Fassungsvermögens der zum Transport benutzen Kabelrolle von Bedeutung sein kann.

Das in Fig. 2 gezeigte, für die vorliegende Verwendung als Seekabel verwendbare, bis auf die Anzahl der Lichtwellenleiter-Röhrchen 5 im wesentlichen den gleichen Aufbau wie das Freileiterseil in Fig. 1 aufweisende Seil 10 ist zur weiteren Erhöhung der Korrosionsbeständigkeit derart weitergebildet, dass die Zwischenräume zwischen den Drähten 2, 4, 9 bzw. Lichtwellenleiter-Röhrchen 5 des Seils 10 und auch zwischen den äusseren Drähten 9 und einer das Seil 10 umschliessenden Hüllfläche 11 mit einer wasserabweisenden Kabelfüllmasse 12 wie Bitumen gefüllt sind. Die Verwendung von Seilen wie diesem Seil 10 als Seekabel kommt insbesondere für Süsswasser-Seen und -Flüsse in Betracht, die durch Chemikalien oder ungeklärte Abwässer mehr oder weniger verschmutzt sind und bei denen daher für Seekabel erhöhte Anforderungen an den Korrosionsschutz gestellt werden müssen, aber natürlich sind Seile wie das Seil 10 auch für klare Flüsse und Seen als Seekabel verwendbar, wenn man z.B. aus Sicherheitsgründen erhöhte Ansprüche an die Korrosionsbeständigkeit des Seekabels stellt.

Eine weitere Erhöhung des Korrosionsschutzes lässt sich noch dadurch erreichen, dass die Hüllfläche 11, wie bei dem Seil 13 in Fig. 3 gezeigt, mit einem wasserdichten, zweckmässig aus Polyäthylen bestehenden Mantel 14 umhüllt ist. Die Verwendung von einem Seil wie dem Seil 13 als Seekabel kommt in erster Linie für salzhaltige Gewässer wie das Meer in Betracht, bei denen naturgemäss höchste Anforderungen an die Korrosionsbeständigkeit zu stellen sind. Aber natürlich kann auch ein Seil wie das Seil 13 für mit Chemikalien oder ungeklärten Abwässern verschmutzte Süsswasser-Seen und -Flüsse und selbstverständlich auch für klare Flüsse und Seen verwendet werden, wenn aus Sicherheitsgründen höchste Anforderungen an die Korrosionsbeständigkeit gestellt werden.

## Patentansprüche

1. Verwendung eines Freileiterseiles (1) bzw. eines Seiles (1, 10, 13) mit dem Aufbau eines Freileiterseiles mit einer Vielzahl von verseilten Drähten (2, 4, 9) aus Metall oder teilweise aus Metall und teilweise aus Kunststoff und mindestens einem eingeseilten Lichtwellenleiter-Röhrchen (5) sowie einem oder mehreren innerhalb des Lichtwellenleiter-Röhrchens (5) angeordneten Lichtwellenleitern (6) als Seekabel.

2. Verwendung nach Anspruch 1, dadurch gekennzeichnet, dass die Drähte mindestens zum Teil Stahldrähte (2, 4, 9) und das bzw. die Lichtwellenleiter-Röhrchen Edelstahlröhrchen (5) sind.

3. Verwendung nach Anspruch 2, dadurch gekennzeichnet, dass das bzw. die Edelstahlröhrchen mit einem von Edelstahl verschiedenen Material beschichtet sind.

4. Verwendung nach einem der Ansprüche 1 bis 3, dadurch gekennzeichnet, dass die Drähte aus Metall bestehen und eine Korrosionsschutzschicht aufweisen und vorzugsweise mindestens zum Teil aus verzinkten Stahldrähten (2, 4, 9) bestehen.

5. Verwendung nach einem der Ansprüche 1 bis 4, gekennzeichnet durch einen Seilaufbau mit einem Kerndraht (2) und mindestens zwei in entgegengesetzter Schlagrichtung verseilten Drahtlagen (3, 8), wobei die Drähte (4, 9) in jeder einzelnen Drahtlage (3, 8) untereinander gleichen Durchmesser aufweisen und in mindestens einer Drahtlage (3) mindestens ein Lichtwellenleiter-Röhrchen (5) von wenigstens annähernd gleichem Durchmesser wie dem der Drähte (4) der betreffenden Drahtlage (3) anstelle eines Drahtes in die Drahtlage (3) eingeseilt ist und wobei das bzw. die Lichtwellenleiter-Röhrchen (5) vorzugsweise in mindestens eine innere Drahtlage (3) eingeseilt sind.

6. Verwendung nach einem der Ansprüche 1 bis 5, dadurch gekennzeichnet, dass die innerhalb des bzw. der Lichtwellenleiter-Röhrchen (5) verbleibenden Hohlräume mit einer nichtsteifen Füllmasse (7) gefüllt sind.

7. Verwendung nach einem der Ansprüche 1 bis 6, dadurch gekennzeichnet, dass die Zwischenräume zwischen den Drähten (2, 4, 9) bzw. Lichtwellenleiter-Röhrchen (5) des Seiles (10) und vorzugsweise auch zwischen den äusseren Drähten (9) und einer das Seil (10) umschliessenden Hüllfläche (11) mit einer vorzugsweise wasserabweisenden Kabelfüllmasse (12), vorzugsweise mit Bitumen, gefüllt sind.

8. Verwendung nach Anspruch 7, dadurch gekennzeichnet, dass die Hüllfläche (11) im wesentlichen zylindermantelförmig ist und einen Durchmesser von weniger als 18 mm hat.

9. Verwendung nach einem der Ansprüche 1 bis 7, dadurch gekennzeichnet, dass das Seil (13) mit einem vorzugsweise wasserdichten, zweckmässig aus Polyäthylen bestehenden Mantel (14) umhüllt ist.

10. Verwendung nach Anspruch 9, dadurch gekennzeichnet, dass der Mantel (14) einen Aussendurchmesser von weniger als 20 mm hat.
